# EUROPÄISCHE PATENTSCHRIFT

(11) **EP 2 053 371 B1**
(45) Veröffentlichungstag und Bekanntmachung des Hinweises auf die Patenterteilung: **29.11.2017**
(21) Anmeldenummer: 07119294.2
(22) Anmeldetag: 25.10.2007
(51) Int. Cl.: G01K 17/04, G01N 25/20, G01N 25/48

(54) **Thermostat**
Thermostat
Thermostat

(43) Veröffentlichungstag der Anmeldung: 29.04.2009
(73) Patentinhaber: Mettler-Toledo GmbH, 8606 Greifensee (CH)
(72) Erfinder: Schenker, Benedikt, 5303, Würenlingen (CH)
(74) Vertreter: Mettler-Toledo

(56) Entgegenhaltungen:
- DE-A1- 10 010 291
- US-A- 4 178 800
- US-A1- 2003 058 918
- US-A1- 2005 036 536
- ZOGG A ET AL: "A New Small-Scale Reaction Calorimeter That Combines the Principles of Power Compensation and Heat Balance" INDUSTRIAL & ENGINEERING CHEMISTRY RESEARCH, AMERICAN CHEMICAL SOCIETY. WASHINGTON, US, Bd. 42, 2003, Seiten 767-776, XP002415219 ISSN: 0888-5885

## Beschreibung

Die Erfindung betrifft einen Thermostaten für ein Kalorimeter zur Temperierung einer Probe und ein Kalorimeter mit einem Thermostaten.

Ein Thermostat wird häufig für die Temperierung von Proben in chemischen und/oder physikalischen Reaktionen oder Prozessen eingesetzt und kann sowohl als Einzelgerät als auch als Teil eines Geräts oder in Kombination mit anderen Geräten verwendet werden. Thermostaten werden beispielsweise für kalorimetrische Untersuchungen, insbesondere reaktionskalorimetrische, und thermische Analysen eingesetzt.

Insbesondere bei Prozessen, bei denen chemische und/oder physikalische Parameter bestimmt werden sollen und nicht nur eine Probe geregelt erwärmt oder gekühlt werden soll, werden hohe Anforderungen an die Leistungsfähigkeit und den abzudeckenden Temperaturbereich des Thermostaten gestellt.

Die Umsetzung dieser Anforderungen, zu denen neben einer schnellen und effizienten Temperaturkontrolle auch die Grösse und Kompaktheit des Thermostaten sowie die Kosten- und Ressourceneffizienz zählen, ist insbesondere bei grösseren Probenvolumina nicht einfach zu realisieren. Im Laborbereich wäre es beispielsweise wünschenswert, Probenvolumina von wenigen Mikrolitern bis hin zu mehreren hundert Millilitern mit demselben Thermostaten temperieren zu können.

Ein Thermostat, beispielsweise für ein Kalorimeter, sollte eine Probe sowohl kühlen als auch erwärmen können. Zum Abtransport der Wärme beim Kühlen einer Probe weist der Thermostat häufig ein Kühlmittel auf. Um eine Probentemperatur zu erreichen, die unterhalb der Kühlmitteltemperatur liegt, können beispielsweise thermoelektrische Elemente, wie Peltier-Elemente, verwendet werden.

Peltier-Elemente weisen herstellungsbedingt eine "kalte" und eine "heisse" Seite auf und können prinzipiell zum Heizen und/oder Kühlen verwendet werden. Die bevorzugte Wärmeflussrichtung entspricht dabei der vom Hersteller angegebenen Polarität der Anschlüsse, wobei diese durch Anlegen einer Spannung mit entgegengesetzter Polarität umgekehrt werden kann. Allerdings muss bei einer nicht spezifikationsgemässen Verwendung mit einer Verkürzung der Lebensdauer der Elemente gerechnet werden. Zudem können Peltier-Elemente im Betrieb eine Eigenspannung erzeugen, welche in Abhängigkeit der thermischen Gegebenheiten, eine andere Polarität aufweisen kann als die des angelegten Stroms. Werden Peltier-Elemente zum Kühlen und Heizen verwendet, so benötigt diese dann zur Regelung komplizierte und somit teuere elektrische Schaltungen.

Bei der Verwendung von Peltier-Elemente zum Kühlen gibt es eine maximale Temperaturdifferenz die zwischen der "heissen" und "kalten" Seite erreicht werden kann. Diese maximale Temperaturdifferenz ergibt sich aus der Tatsache, dass die aufgrund des thermoelektrischen Effekts gepumpte Wärmemenge proportional zum fliessenden Strom ist, während die elektrischen Verluste quadratisch mit der Stromstärke ansteigen. Ab einer bestimmten Stromstärke übersteigt die Zunahme der elektrischen Verlustleistung die Zunahme der gepumpten Wärmeleistung, so dass keine weitere Absenkung der Temperatur möglich ist.

Die maximale Temperaturdifferenz beträgt bei den heute verfügbaren einstufigen thermoelektrischen Elementen etwas 50K. Die "kalte" Seite kann somit maximal etwa 50K kälter sein als die "heisse" Seite.

Beim Heizen werden die Peltier-Elemente mit entgegengesetzter Polarität und daher nicht spezifikationsgemäss betrieben, so dass mit einer Verringerung der Gebrauchs-oder Lebensdauer und damit auch mit einer Erhöhung der Instandhaltungskosten zu rechnen ist. Die Lebensdauer verringert sich zusätzlich, wenn die Elemente zum Erreichen einer höheren Heizleistung im Überlastbetrieb verwendet werden.

Neben einstufigen sind auch mehrstufige Peltier-Elemente bekannt, welche meist asymmetrisch aufgebaut sind, da die in Wärmeflussrichtung nachgeschalteten Peltier-Elemente nicht nur die zur Kühlung genutzte Wärmeleistung, sondern auch die kumulierte elektrische Verlustleistung der thermisch vorgeschalteten Peltier-Elemente abführen müssen. Die nachgeschalteten Peltier-Elemente weisen daher eine um mehrere Faktoren grössere Kapazität als die vorgeschalteten Elemente auf. Pro Stufe wird die Kapazität um einen Faktor von etwa 2 bis 5 erhöht. Insbesondere mehrstufige Peltier-Elemente sollten daher nicht mit umgekehrter Polarität betrieben werden, da es neben den bereits erwähnten Nachteilen durch den asymmetrischen Aufbau und den zu einer lokalen Überlastung der Peltier-Elemente mit kleinerer Kapazität oder sogar zu deren Zerstörung kommen kann.
Thermostaten für bekannte Reaktionskalorimeter sind häufig nur für kleine Probenvolumina von maximal etwa 20 ml über Temperaturbereiche, welche zwischen etwa -30°C und etwa +150°C liegen, ausgelegt, zeigen eine relativ langsame und schwerfällige Temperaturregelung und benötigen eine grosse, voluminöse und leistungsstarke Stromversorgung.
Reaktionskalorimeter werden unter anderem zur Ermittlung chemischer und/oder physikalischer Parameter einer Probe verwendet. Der Einsatz eines schnellen und effizienten Thermostaten ist insbesondere bei der Untersuchung temperaturkritischer Proben wichtig. Bei temperaturkritischen Proben können bereits durch geringe Temperaturschwankungen Veränderungen der Zusammensetzung, Struktur oder anderer chemischer und/oder physikalischer Eigenschaften auftreten. Ein Reaktionskalorimeter mit einem Thermostaten wird beispielsweise in der WO 02/21089 A1 offenbart. Ein weiteres Reaktionskalorimeter ist in "A new Small-Scale Reaction Calorimeter That Combines the principles of Power Compensation and Heat Balance", Andreas Zogg et al, Ind.Eng.Chem.Res. 2003, 43, pp.767-776 beschrieben. Die Aufgabe liegt daher in der Entwicklung eines Thermostaten für ein Kalorimeter, welcher eine schnelle und effiziente Temperaturregelung für Probenvolumina bis zu mehreren hundert Millilitern über einen grossen Temperaturbereich gewährleistet und gleichzeitig kompakt und kostengünstig hergestellt werden kann.
Gelöst wird diese Aufgabe durch einen erfindungsgemässen Thermostaten für ein Kalorimeter zur Temperierung einer Probe gemäß Anspruch 1, sowie ein Kalorimeter mit einem derartigen Thermostaten gemäß Anspruch 6. Der Thermostat weist mindestens ein Heizelement und ein thermoelektrisches Kühlelement auf. Das Heizelement und das Kühlelement sind getrennte funktionelle Einheiten. Das Heizelement dient dazu, der Probe direkt oder indirekt Wärme zuzuführen. Das Kühlelement ist thermisch mit einem Kühlmittel verbunden und kann Wärme von der Probe zum Kühlmittel leiten oder pumpen. Der erfindungsgemässe Thermostat zeichnet sich dadurch aus, dass das Kühlmittel eine im Wesentlichen konstante Kühlmitteltemperatur aufweist.

Die Verwendung separater Elemente zum Kühlen und Heizen ist besonders vorteilhaft, da die funktionelle Trennung die Verwendung optimal angepasster Bauteile ermöglicht und so die Verwendung eines thermoelektrischen Elements zum Kühlen und Heizen und die damit verbundenen Nachteile vermieden werden können. Zudem kann ein deutlich grösserer Temperaturbereich abgedeckt werden als es beispielsweise bei der alleinigen Verwendung von Peltier-Elementen zum Heizen und Kühlen möglich wäre.

Die Wärmeabfuhr von der Probe über ein thermoelektrisches Kühlelement zu einem Kühlmittel mit im Wesentlichen konstanter Kühlmitteltemperatur ist ebenfalls vorteilhaft, da kein zusätzliches, getrennt geregeltes Kühlmedium benötigt wird, wie es beispielsweise in der WO 02/21089 A1 offenbart wird, wodurch der erfindungsgemässe Thermostat kompakt und kleiner gestaltet werden kann. Zudem ermöglicht die konstante Kühlmitteltemperatur eine einfache und präzise Regelung der Probentemperatur, wobei das Kühlmittel über den vollständigen Temperaturbereich des Thermostaten eine im Wesentlichen konstante Kühlmitteltemperatur aufweist.

Das Kühlelement weist vorzugsweise mindestens ein mit einer gleichgerichteten Spannung betriebenes Peltier-Element auf.

Zum Betrieb des Kühlelements kann der Thermostat eine einfache, unipolare Stromquelle aufweisen, welche beispielsweise mit einer einfachen pulsweitenmodulierten Steuer- und/oder Regeleinheit betrieben wird.

Die Zahl der Peltier-Elemente kann in Abhängigkeit der gewünschten Kühlleistung und des Probenvolumens erhöht werden. Mehrere Peltier-Elemente können in Reihe oder parallel geschaltet werden, wobei es sich um einstufige und/oder mehrstufige Peltier-Elemente handeln kann.

Die Peltier-Elemente sollten in ihrer Vorzugsrichtung betrieben werden, so dass Wärme von der "kalten" Seite zur "heissen" Seite gepumpt wird. Dieses ist sehr vorteilhaft, da so die Peltier-Elemente eine erheblich längere Lebensdauer aufweisen und es möglich ist, die volle Kühlleistung derselben zu nutzen.

Die Anzahl und Anordnung der eingesetzten Peltier-Elemente steht ebenso wie die Kühlmitteltemperatur und das verwendete Kühlmittel mit der erreichbaren Minimaltemperatur der Probe in Relation. Mit einem einzelnen Peltier-Element kann die Probentemperatur um etwa 50K und insbesondere etwa 30K unterhalb der Kühlmitteltemperatur abgesenkt werden.

Durch den Einsatz von mehrstufigen, insbesondere in Serie geschalteten Elementen kann der Kühlbereich vergrössert werden. Für jede Stufe kann eine maximale Temperaturdifferenz von bis zu etwa 50K erreicht werden. Ein zweistufiges Element kann somit die Probentemperatur bei gleichbleibendem Probenvolumen um maximal etwa 100K absenken, ein dreistufiges um maximal etwa 150K, etc.

Das Kühlelement wirkt als Wärmepumpe, welche die von der Probe abgegebene und/oder erzeugte Wärme an das Kühlmittel weiterleitet. Vorzugsweise wird die Kühlmitteltemperatur so gewählt, dass eine effiziente Wärmeabfuhr vom Kühlelement gewährleistet ist.

Bei einer Kühlmitteltemperatur von etwa +10°C kann mit einem einstufigen Peltier-Element eine minimalen Probentemperatur von etwa -40°C bis etwa -20°C erreicht werden. Die Temperatur von Leitungswasser liegt etwa bei +10°C, so dass der Thermostat in diesem Fall einfach an einen Wasserhahn angeschlossen werden kann. Soll die Probe nur auf etwa 0°C abgekühlt werden, so kann beispielsweise Umgebungsluft mit einer Temperatur von bis zu +25°C als Kühlmittel eingesetzt werden.

Die erreichbare Minimaltemperatur hängt direkt mit der Kühlleistung des Kühlelements und der Kühlmitteltemperatur zusammen. Je niedriger die Kühlmitteltemperatur ist, desto niedriger ist die erreichbare Minimaltemperatur, bei Verwendung desselben Kühlelements. Die Minimaltemperatur kann durch Einsatz eines Kühlmittels mit einer niedrigeren Kühlmitteltemperatur und/oder eines Kühlelements mit einer grösseren Kühlleistung, wie z. B. mehrstufige Peltier-Elemente, weiter gesenkt werden.

Als Kühlmittel können neben Wasser auch andere flüssige oder gasförmige Fluide eingesetzt werden, wie beispielsweise Luft, Kühlsole oder ein Kühlmittel eines am Einsatzort bereits installierten Kühlmittelkreislaufes. Weiter kann die anfallende Wärme durch die Verdampfung eines Kältemittels abgeführt werden.

Das Heizelement kann als elektrische Widerstandsheizung, induktive oder elektromagnetische Heizung ausgestaltet sein und kann der Probe direkt oder indirekt Wärme zuführen. Eine elektromagnetische Heizung kann beispielsweise eine Probe durch elektromagnetische Strahlung erwärmen.

Mit dem erfindungsgemässen Thermostaten kann die Probentemperatur über einen grossen Temperaturbereich geregelt werden. Ein bevorzugter Temperaturbereich liegt zwischen etwa -50 °C und etwa +200 °C und vorzugsweise zwischen etwa -30 °C und etwa +180 °C.

Die obere Temperaturgrenze wird durch die Leistung des Heizelements und selbstverständlich auch durch die thermische Belastbarkeit der eingesetzten Materialien beeinflusst. Ein erfindungsgemässer Thermostat kann daher durch Verwendung eines geeigneten Kühlelements, Kühlmittels und/oder durch Auswahl der geeigneter Materialien und/oder der Heizleistung auch für andere Temperaturbereiche ausgestaltet werden.

Besonders bevorzugt ist das Zusammenwirken eines erfindungsgemässen Thermostaten mit einer thermoanalytischen Vorrichtung zur Bestimmung von thermogravimetrischen, kalorimetrischen, thermodynamischen, rheologischen oder thermo-mechanischen Eigenschaften einer Probe. Für diese Anwendungen ist sowohl eine schnelle und präzise Temperaturregelung als auch die Verwendung effizienter und kompakter Thermostaten wünschenswert.

Der erfindungsgemässe Thermostat ist vorzugsweise so aufgebaut, dass Wärme immer von der "kalten" auf die "heisse" Seite des thermoelektrischen Kühlelements fliesst. Da das thermoelektrische Kühlelement, vorzugsweise mindestens ein Peltier-Element, immer mit der spezifizierten Polarität betrieben wird, ist die Wärmeflussrichtung durch das Kühlelement im Wesentlichen unabhängig von den von aussen auf das Kühlelement einwirkenden Temperaturen, zu denen unter anderen die Probentemperatur und die Kühlmitteltemperatur zählen.

Die maximale erreichbare Probentemperatur des Thermostaten wird vor allem von den Materialien des Thermostaten und der Einheit, in der die Probe angeordnet ist, bestimmt. Beim Erwärmen der Probe verhält sich das Kühlelement passiv und leitet die Wäre einfach an das Kühlmittel weiter, so dass eine lokale Überhitzung der Elemente vermieden werden kann. Beim Einsatz von Peltier-Elementen entspricht dieses einer thermoelektrischen Stromproduktion, welche keinen Einfluss auf die Lebensdauer der Peltier-Elemente hat..

Ein weiterer Aspekt der Erfindung betrifft ein Kalorimeter, insbesondere ein Reaktionskalorimeter, mit einem erfindungsgemässen Thermostaten. Das Kalorimeter weist mindestens einem Reaktor zur Aufnahme einer Probe, einen den Reaktor umgebenden Reaktormantel und einen im Reaktor angeordneten Rührer auf. Das Kühlelement und das Heizelement des Thermostaten sind direkt oder indirekt mit der Probe verbunden und wirken vorzugsweise über den Reaktormantel auf die Probe ein. Die Temperatur eines im Thermostaten angeordneten Kühlmittels ist im Wesentlichen konstant. Die Kühlmitteltemperatur steht insbesondere in Relation zur Minimaltemperatur der Probe.

Die Verwendung eines erfindungsgemässen Thermostaten in Kombination mit einem Kalorimeter ist sehr vorteilhaft, da im Vergleich mit bekannten Kalorimetern die Leistungsaufnahme bei gleichzeitiger Verringerung der Grösse des Gesamtgeräts um einige Faktoren gesenkt werden kann, wodurch eine kostengünstigere Herstellung ermöglicht wird.

Das Heizelement kann als Widerstandsheizung, elektromagnetische oder induktive Heizung ausgestaltet sein und direkt und/oder indirekt mit der Probe zusammenwirken.

Der Reaktor kann ein Volumen von etwa 5 ml bis etwa 1000 ml, vorzugsweise von 5 ml bis etwa 500 ml und insbesondere von etwa 20 ml bis etwa 150 ml aufweisen. Ein erfindungsgemässer Thermostat kann als Einzelgerät zur Temperierung sowohl kleinerer als auch grösserer Probenvolumina oder auch in Kombination mit einem Kalorimeter eingesetzt werden.

Der Reaktormantel kann als Materialblock ausgestaltet sein, welcher ein Material mit hoher thermischer Leitfähigkeit und eine Aussparung für den Reaktor aufweist. Als Materialien eignen sich unter anderem verschiedene Metalle, wie Kupfer oder Aluminium, Metalllegierungen oder Keramiken.

Weiterhin kann der Reaktormantel ein doppelwandiger Reaktormantel sein, welcher mit einem Temperiermittel befüllt ist. Als Temperiermittel können eine Vielzahl von flüssigen und/oder gasförmigen Fluiden eingesetzt werden, wie beispielsweise Wasser, verschiedene Wärmeträgeröle, wie Silikonöl, oder inerte Gase, wie Stickstoff oder Helium.

In einer weiteren Ausgestaltung kann der Reaktormantel eine oder mehrere Heat Pipes zur Wärmeleitung aufweisen. Die Heat Pipes können beispielsweise in einem Materialblock aus einem Material mit geringer thermischer Leitfähigkeit angeordnet sein, welcher vorzugsweise eine Aussparung für den Reaktor aufweist.

Der Reaktor kann entweder in eine vom Reaktormantel gebildete Aussparung eingesetzt werden, wobei die Aussparung passgenau sein sollte, um thermische Verluste möglichst gering zu halten, oder der Reaktor und der Reaktormantel können eine gemeinsame Einheit bilden. Dieses bietet sich an, wenn der Reaktormantel aus einem chemisch inerten Material besteht, wie dieses insbesondere bei der Verwendung eines doppelwandigen Glasreaktors der Fall ist.

Ein erfindungsgemässes Kalorimeter kann mehrere Reaktoren aufweisen, welche so angeordnet sind, dass diese parallel betrieben werden können, wobei die Temperierung aller Reaktoren durch einen gemeinsamen Thermostaten erfolgen kann, was insbesondere für Reihenuntersuchungen vorteilhaft ist.

Weiterhin kann ein erfindungsgemässer Thermostat für die Temperierung mehrerer erfindungsgemässe Kalorimeter verwendet werden, welche in einem gemeinsamen Gehäuse und/oder in separaten Gehäusen angeordnet sind. Die Temperatur jedes Kalorimeters kann unabhängig geregelt werden, ohne dass die Kühlmitteltemperatur angepasst werden muss. Die Kühlmitteltemperatur ist auch bei dieser Anwendung im Wesentlichen konstant. Der Thermostat kann einen gemeinsamen Kühlmittelkreislauf und/oder getrennte Kühlmittelkreisläufe für die einzelnen Kalorimeter aufweisen.

Ein erfindungsgemässer Thermostat sowie verschiedene Kalorimeter mit einem erfindungsgemässen Thermostaten werden im Folgenden anhand der Figuren beschrieben, wobei gleiche Elemente mit gleichen Bezugszeichen bezeichnet werden. Die Figuren zeigen:
- Fig. 1: eine stark schematische Darstellung der Funktionsweise und des Aufbaus eines erfindungsgemässen Thermostaten zur Temperierung einer Probe;
- Fig. 2: eine schematische Darstellung eines Kalorimeters, welches mit einem erfindungsgemässen Thermostaten zusammenwirkt;
- Fig. 3: eine schematische Darstellung eines weiteren Kalorimeters, welches mit einem erfindungsgemässen Thermostaten zusammenwirkt;
- Fig. 4: ein weiteres Kalorimeter mit einem Metallblock als Reaktormantel, welches mit einem erfindungsgemässen Thermostaten zusammenwirkt, im Schnitt;
- Fig. 5: eine schematische Anordnung von mehreren Kalorimetern mit einem gemeinsamen Thermostaten.

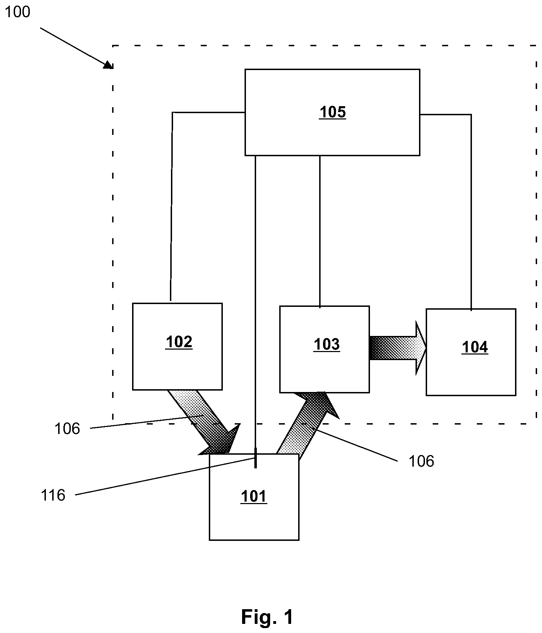

In Figur 1 ist stark schematisiert der Aufbau und die Funktionsweise eines erfindungsgemässen Thermostaten 100 gezeigt. Eine Probe 101 ist thermisch mit dem Thermostaten 100 verbunden, welcher ein Heizelement 102, ein thermoelektrisches Kühlelement 103 und ein mit dem thermoelektrischen Kühlelement 103 thermisch verbundenes Kühlmittel 104 aufweist. Die Regelung und/oder Ansteuerung des Thermostaten 100 erfolgt über eine Steuer- und/oder Regeleinheit 105, welche auch den für den Betrieb der einzelnen Elemente notwendigen Strom zur Verfügung stellt. Ferner ist die Steuer- und/oder Regeleinheit mit mindestens einem Temperatursensor 116 zur Bestimmung der Probentemperatur verbunden.

Der Wärmefluss zwischen Thermostaten 100 und Probe 101 ist hier durch die Pfeile 106 dargestellt. Für den Fall, dass die Probe 101 durch das Heizelement 102 erwärmt und überschüssige Wärme durch das Kühlelement 103 zum Kühlmittel 104 gepumpt wird, verhält sich das Kühlelement 103 passiv und leitet hauptsächlich die überschüssige Wärme direkt an das Kühlmittel 104 weiter. Zur Kühlung wird die Wärmezufuhr vom Heizmittel 102 zur Probe 101 abgeschaltet und das Kühlelement 103 aktiviert, so dass der Probe 101 nun aktiv Wärme entzogen und an das Kühlmittel 104 weitergeleitet wird.

Auf diese Weise kann der Thermostat 100 der Probe 101 Wärme zuführen oder dieser Wärme entziehen und so die Temperatur der Probe 101 innerhalb seines Temperaturbereichs regeln, welcher durch Auswahl der einzelnen Komponenten beeinflusst werden kann. Das Kühlmittel 104 hat sowohl beim Heizen als auch beim Kühlen der Probe eine im Wesentlichen konstante Eingangstemperatur und/oder Kühlmitteltemperatur. "Im Wesentlichen konstant" bezeichnet hier eine Temperatur, welche im Rahmen der Messunsicherheit und der Gerätespezifikationen konstant ist.

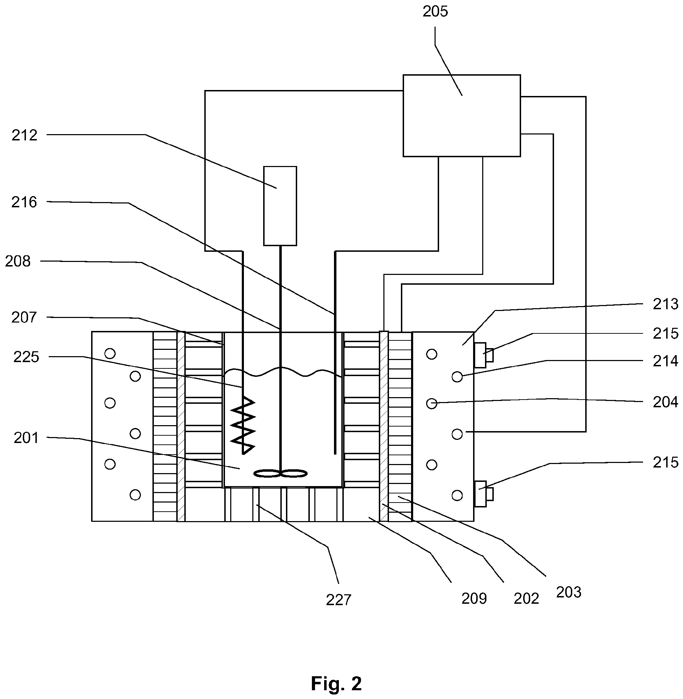

Verschiedene Kalorimeter, genauer Reaktionskalorimeter, mit einem erfindungsgemässen Thermostaten sind in den Figuren 2 bis 5 gezeigt.

Das in Figur 2 gezeigte Kalorimeter weist einen Reaktor 207 zur Aufnahme einer Probe 201 auf. Im Reaktor 207 ist ein mit einem Motor 212 verbundener Rührer 208 angeordnet, welcher der Durchmischung der Probe 201 dient. Weiterhin ist im Reaktor 207 eine Kalibrierheizung 225 angeordnet, welche direkt auf die Probe 201 einwirken kann. Der Reaktor 207 ist von einem Reaktormantel 209 umgeben, welcher hier mehrere Heat Pipes 227 zur Wärmeleitung aufweist. Der Reaktormantel 209 weist eine Aussparung auf, in die der Reaktor 207 passgenau einsetzbar ist.

Die Temperatur der im Reaktor 207 angeordneten Probe 201 wird mit einem erfindungsgemässen Thermostaten geregelt. Der Thermostat weist eine elektrische Widerstandsheizung als Heizelement 202 auf, welche aussen am Reaktormantel 209 angeordnet ist und über den Reaktormantel 209 und das darin befindliche Temperiermittel 210 thermisch mit der Probe 201 verbunden ist. Auf diese Weise kann die durch das Heizelement 202 erzeugte Wärme zur Probe 201 geleitet werden.

Zur Wärmeabfuhr oder zum Kühlen der Probe 201 dient ein Kühlelement 203, welches im Wesentlichen aus einer Anordnung von einstufigen Peltier-Elementen besteht. Das Kühlelement 203 umgibt das Heizelement 202. Die thermischen Kontaktflächen zwischen dem Reaktormantel 209 und dem Heizelement 202 sowie zwischen dem Heizelement 202 und dem Kühlelement 203 sollten möglichst gross sein, um einen schnellen Wärmeaustausch zu ermöglichen. Gleichzeitig ermöglicht diese Anordnung von Reaktormantel 209, Heizelement 202 und Kühlelement 203, dass die gegebenenfalls im Betrieb im Kühlelement 203 durch die Peltier-Elemente entstehende Wärme direkt über das Kühlmittel 204 abgeführt werden kann und nicht auf die Probe 201 einwirkt.

Das Kühlelement 203 ist wiederum von einem Kühler 213 umgegeben, in dem mit einem Kühlmittel 204 befüllte Leitungen 214 angeordnet sind. Als Kühlmittel 204 können verschiedene Fluide eingesetzt werden, welche über die Anschlüsse 215 in die Leitungen 214 eingebracht, aus diesen entfernt oder mit geeigneten Mitteln durch diese gepumpt werden können. Die Auswahl des Kühlmittels 204 und dessen Eingangstemperatur oder Kühlmitteltemperatur hängen vor allem mit der gewünschten Kühlleistung zusammen, da die heute verfügbaren einstufigen Peltier-Elemente in der Lage sind eine Temperaturabsenkung um etwa 30K bis 50K in Relation zur Temperatur des Kühlmittels 204 zu erzeugen. Das Kühlelement 203 ist thermisch mit dem Kühlmittel 204 verbunden und kann Wärme von der Probe 201 zum Kühlmittel 204 pumpen oder leiten. Für Probentemperaturen deutlich oberhalb der Kühlmitteltemperatur sind die Peltier-Elemente des Kühlelements 203 nicht aktiv und leiten die Wärme einfach passiv an den Kühler 213 weiter. Für Laboranwendung kann beispielsweise Wasser als Kühlmittel 204 eingesetzt werden, welches je nach Wasserqualität direkt aus der Wasserleitung durch den Kühler 213 geleitet werden kann.

Die Peltier-Elemente des Kühlelements 203 sind so angeordnet, dass ihre "heisse" Seite dem Kühler 213 und ihre "kalte" Seite dem Heizelement 202 zugewandt ist. Dadurch hat der Wärmefluss durch das Kühlelement 203 immer dieselbe Richtung und es ist möglich, die Temperatur des Kühlmittels 214 im Betrieb über den gesamten Temperaturbereich des Thermostaten im Wesentlichen konstant zu halten, da das Kühlmittel 204 ausschliesslich zum Abtransport der Wärme verwendet wird.

Der Thermostat und damit auch die Temperatur der Probe 201 wird über eine Steuer-und/oder Regeleinheit 205 geregelt, welche die tatsächliche Temperatur der Probe 201, die zum Beispiel über einen mit der Probe 201 in Kontakt stehenden Temperatursensor 216 ermittelt wird, auf eine vorgegebene Solltemperatur erhöht oder absenkt. Dies geschieht dadurch, dass je nach aktueller Temperatur und gewünschter Solltemperatur der Probe 201, dieser entweder mit dem Heizelement 202 Wärme zugeführt oder mit dem Kühlelement 203 Wärme aus dem Reaktor 207 oder aus der Probe 201 gepumpt wird. Selbstverständlich ist es auch möglich, die Probe 201 einem vorgegebenen Temperaturprofil zu unterwerfen.

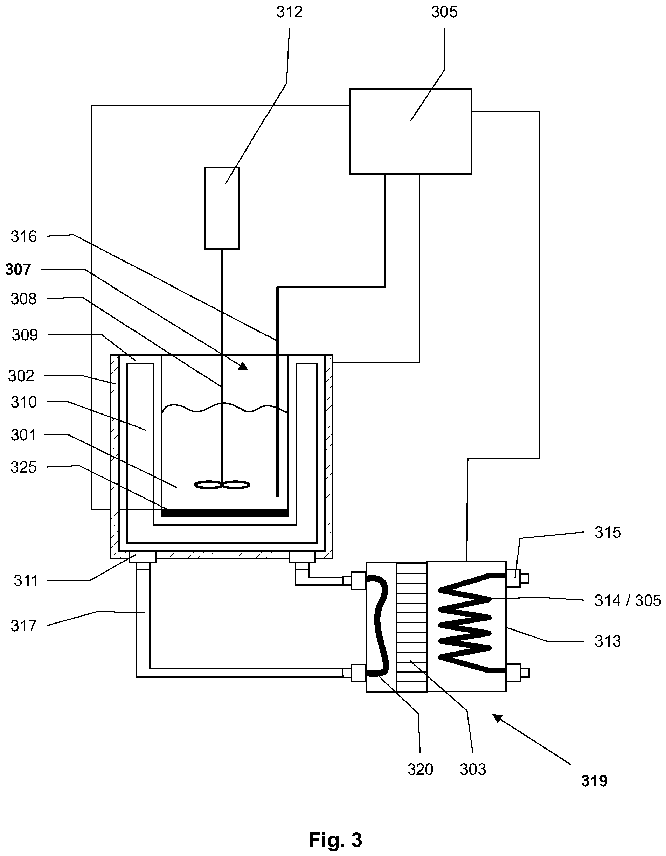

Alternativ zu der in Figur 2 gezeigten Anordnung, kann ein Kalorimeter einen doppelwandigen Reaktormantel 309 aufweisen, welcher mit einem Temperiermittel 310 gefüllt ist, das durch eine Kühlvorrichtung 319 geleitet wird, wie es in Figur 3 gezeigt ist. Die Kühlvorrichtung 319 ist über geeignete Leitungen 317 mit dem Reaktormantel 309 verbunden. Der Reaktormantel 309 hat eine Aussparung, welche als Reaktor 307 verwendet wird, so dass Reaktormantel 309 und Reaktor 307 eine gemeinsame Einheit darstellen.

Die Kühlvorrichtung 319 weist zwei getrennte Kreisläufe 314, 320 für das Temperiermittel 310 und für das Kühlmittel 305 auf. Beide Kreisläufe 314, 320 sind thermisch mit einem Kühlelement 303 verbunden, welches mindestens ein mehrstufiges Peltier-Element aufweist, dessen "heisse" Seite thermisch mit dem Kühlmittel 305 und dessen "kalte" Seite thermisch mit dem Temperiermittel 310 verbunden ist. Der Kühlmittelkreislauf 314 kann über die Anschlüsse 315 mit einem geeigneten Kühlmittel 305 beschickt werden.

Neben der Kühlvorrichtung 319 umfasst der in Figur 3 gezeigte Thermostat weiterhin ein den Reaktormantel 309 umgebendes Heizelement 302 und eine mit dem Heizelement 302, mit mindestens einem Temperatursensor 316 zur Erfassung der Temperatur der Probe 307 und mit der Kühlvorrichtung 319 verbundene Steuer-und/oder Regeleinheit 305. Das Heizelement 302 ist hier als induktives Heizelement ausgestaltet.

Weiterhin weist das Kalorimeter eine im Reaktor 307 angeordnete Kalibrierheizung 325 auf, welche hier in Form einer Heizspirale am Boden des Reaktors 307 ausgebildet ist, wobei alternativ auch die in Figur 2 gezeigte Kalibrierheizung verwendet werden kann.

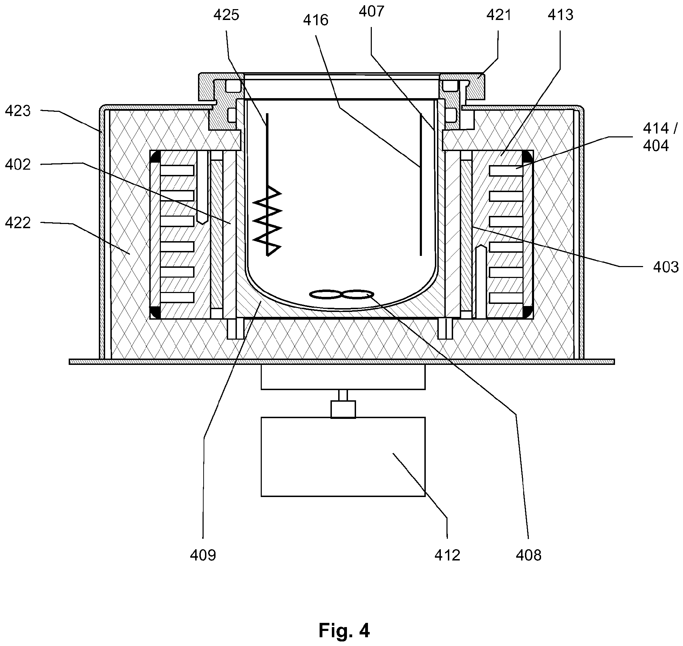

Figur 4 zeigt ein weiteres Kalorimeter im Schnitt, welches mit einem erfindungsgemässen Thermostaten zusammenwirkt. Das Kalorimeter weist einen Reaktor 407 zur Aufnahme einer Probe (s. Figuren 2 und 3) auf, welcher mit einem Reaktordeckel 421 verschliessbar ist. Im Inneren des Reaktors 407 ist ein Rührer 408, welcher mit einem Rührmotor 412 zusammenwirkt, eine Kalibrierheizung 425 in Form einer elektrischen Widerstandsheizung und ein Temperaturfühler 416 zur Erfassung der Probentemperatur und/oder der Temperatur im Reaktor 407 angeordnet. Das Kalorimeter sowie der Thermostat werden durch eine hier nicht gezeigte Steuer-und/oder Regeleinheit kontrolliert.

Der Reaktor 407 ist von einem Reaktormantel 409 umgeben, welcher hier als Materialblock mit einer hohen thermischen Leitfähigkeit und mit einer Aussparung für den Reaktor 407 ausgestaltet ist. Als Material wird bevorzugt Aluminium oder Kupfer eingesetzt, wobei auch andere Metalle, Metalllegierungen oder Keramiken verwendet werden können. Die Wände des Reaktormantels 409 sind von einem als elektrische Widerstandsheizung ausgestaltetem Heizelement 402 umgeben, welches zwischen dem Reaktormantel 409 und einem Kühlelement 403 angeordnet ist. Das Kühlelement 403 umfasst in dieser Ausgestaltung mindestens ein einstufiges Peltier-Element, welches wie bereits im Zusammenhang mit den Figuren 2 und 3 beschrieben verwendet ist.

Aussen an das Kühlelement 403 schliesst sich in diesem Ausführungsbeispiel ein Kühler 413 an, welcher Leitungen 414 aufweist, durch die ein Kühlmittel 404 geleitet wird. Die vom Kühlelement 403 abgegebene Wärme wird durch das Kühlmittel 404 nach aussen abgeleitet.

Bei kalorimetrischen Bestimmungen ist es sinnvoll, dass die Probe in einer thermisch abgeschlossenen oder zumindest geschlossenen Umgebung untersucht wird. Aus diesem Grund befinden sich das Kalorimeter sowie auch der Thermostat in einem mit Isolationsmaterial 422 versehenen Gehäuse 423. Auf diese Weise ist es möglich, die verschiedenen Wärmeflüsse zu erfassen und daraus chemische und/oder physikalische Parameter abzuleiten. Zur Erfassung der Wärmeströme können beispielsweise Wärmeflusssensoren und/oder Temperatursensoren eingesetzt werden, die zumindest den Wärmeaustausch der Probe mit dem Reaktor und/oder dem Reaktormantel erfassen. Zusätzlich sollten auch die Temperaturen und/oder Wärmeflüsse durch weitere Bauteile des Kalorimeters und/oder des Thermostaten erfasst werden. Da Kalorimeter, deren Aufbau und Messprinzip prinzipiell bekannt sind, werden die verschiedenen Möglichkeiten zur Positionierung solcher Sensoren hier nicht explizit gezeigt.

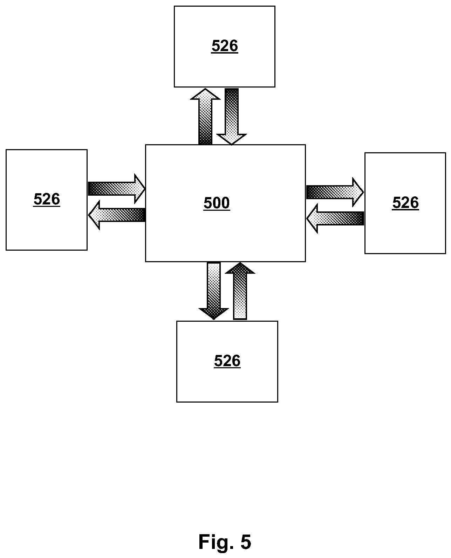

Figur 5 zeigt eine schematische Darstellung einer Anordnung von mehreren - hier sind vier gezeigt - Kalorimetern 526, welche mit einen gemeinsamen Thermostaten 500 thermisch verbunden sind. Der Funktionsweise des Thermostaten 500 entspricht im Wesentlichen der des in Figur 1 gezeigten Thermostaten. Die Kalorimeter 526 sind vorzugsweise gleich aufgebaut, so dass diese parallel betrieben werden können, um beispielsweise Reihenuntersuchungen an ähnlichen Proben oder Reaktionsgemischen durchführen zu können.

### Bezugszeichenliste

- 100,500: Thermostat
- 101,201,301: Probe
- 102, 202, 302, 402: Heizelement
- 103, 203, 303, 403: Kühlelement
- 104, 204, 304, 404: Kühlmittel
- 105, 205, 305, 405: Steuer- und/oder Regeleinheit
- 106: Wärmefluss
- 207,307,407: Reaktor
- 208, 308, 408: Rührer
- 209, 309, 409: Reaktormantel
- 310: Temperiermittel
- 311: Anschluss
- 212, 312, 412: Rührmotor
- 213, 313, 413: Kühler
- 214, 314, 414: Leitung; Kreislauf
- 215, 315: Anschluss
- 116, 216, 316, 416: Temperatursensor
- 317: Leitung
- 319: Kühlvorrichtung
- 320: Kreislauf
- 421: Reaktordeckel
- 422: Isolation
- 423: Gehäuse
- 225, 325, 425: Kalibrierheizung
- 526: Kalorimeter
- 227: Heat Pipe

## Patentansprüche

1. Thermostat (100, 500) für ein Kalorimeter zur Temperierung einer Probe (101, 201, 301) mit mindestens einem Heizelement (102, 202, 302, 402), welches der Probe (101, 201, 301) direkt oder indirekt Wärme zuführt, mit einem thermoelektrischen Kühlelement (103, 203, 303, 403), welches während des Betriebs thermisch mit einem Kühlmittel (104, 204, 304, 404) verbunden ist und zur Wärmeleitung von der Probe (101, 201, 301) zum Kühlmittel (104, 204, 304, 404) dient, mit einer Steuer- und/oder Regeleinheit (105, 205, 305) zur Regelung und/oder Ansteuerung des Thermostaten (100, 500), welche die Temperatur der Probe (101, 201, 301) innerhalb des Temperaturbereichs des Thermostaten (100, 500) regelt, wobei das thermoelektrische Kühlelement (103, 203, 303, 403) und das Heizelement (102, 202, 302, 402) separate Elemente sind, und wobei das Kühlmittel (104,...) sowohl beim Heizen als auch beim Kühlen der Probe (101, ...) eine im Wesentlichen konstante Kühlmitteltemperatur aufweist, **dadurch gekennzeichnet, dass** während des Betriebs der Thermostat (100, 500) der Probe (101, 201, 301) entweder über das Heizelement (102, 202, 302, 402) Wärme zuführt oder dieser über das thermoelektrische Kühlelement (103, 203, 303, 403) Wärme entzieht, indem die Steuer- und/oder Regeleinheit (105, 205, 305) den Thermostaten (100, 500) so regelt, dass das thermoelektrische Kühlelement (103, 203, 303, 403) passiv ist und überschüssige Wärme direkt an das Kühlmittel (104, 204, 304, 404) weiterleitet, während das Heizelement (102, 202, 302, 402) die Probe (101, 201, 301) erwärmt..

2. Thermostat gemäss Anspruch 1, **dadurch gekennzeichnet, dass** das Kühlelement (103) mindestens ein Peltier-Element aufweist, welches mit einer gleichgerichteten Spannung betrieben wird.

3. Thermostat gemäss einem der Ansprüche 1 oder 2, **dadurch gekennzeichnet, dass** das Kühlelement ein einzelnes einstufiges Peltier-Element aufweist und dass während des Betriebs die Minimaltemperatur der Probe (101, 201, 301) etwa 50K und vorzugweise etwa 30K niedriger ist als die Kühlmitteltemperatur.

4. Thermostat gemäss einem der Ansprüche 1 bis 3, **dadurch gekennzeichnet**, die Kühlmitteltemperatur im Bereich von etwa +3°C bis etwa +15°C, vorzugsweise im Bereich von etwa +3°C bis etwa +10°C liegt und insbesondere etwa +5°C beträgt, und dass der Thermostat zur Temperierung einer Probe (101, 201, 301) in einen Temperaturbereich von etwa -40°C bis etwa +200°C und vorzugsweise von etwa -30°C bis etwa +180°C ausgestaltet ist.

5. Thermostat gemäss einem der Ansprüche 1 bis 4, **dadurch gekennzeichnet, dass** dieser mit einer thermoanalytischen Vorrichtung zur Bestimmung der thermogravimetrischen, kalorimetrischen, rheologischen oder thermo-mechanischen Eigenschaften der Probe zusammenwirkt.

6. Kalorimeter mit einem Thermostaten nach einen der Ansprüche 1 bis 5, mit mindestens einem Reaktor (207, 307, 407) zur Aufnahme einer Probe (201, 301), mit einem den Reaktor (207, 307, 407) umgebenden Reaktormantel (209, 309, 409), und mit einem im Reaktor (207, 307, 407) angeordneten Rührer (208, 308, 408), **dadurch gekennzeichnet, dass** das Kühlelement (203, 303, 403) des Thermostaten und das Heizelement (202, 302, 402) des Thermostaten thermisch mit der Probe (201, 301) zusammenwirken und mittels der Steuer-und/oder Regeleinheit (105, 205, 305) geregelt werden, **dadurch gekennzeichnet, dass** der Thermostat (100, 500) der Probe (101, 201, 301) entweder über das Heizelement (102, 202, 302, 402) Wärme zuführt oder dieser über das thermoelektrische Kühlelement (103, 203, 303, 403) Wärme entzieht, indem die Steuer- und/oder Regeleinheit (105, 205, 305) den Thermostaten (100, 500) so regelt, dass das thermoelektrische Kühlelement (103, 203, 303, 403) passiv ist und überschüssige Wärme direkt an das Kühlmittel (104, 204, 304, 404) weiterleitet, während das Heizelement (102, 202, 302, 402) die Probe (101, 201, 301) erwärmt, wobei das Kühlmittel (104, 204, 304, 404) sowohl beim Heizen als auch beim Kühlen der Probe (101, 201, 301) eine im Wesentlichen konstante Kühlmitteltemperatur aufweist..

7. Kalorimeter gemäss Anspruch 6, **dadurch gekennzeichnet, dass** der Reaktor (207, 307, 407) ein Volumen von etwa 5 ml bis etwa 1000 ml, vorzugsweise von 5 ml bis etwa 500 ml und insbesondere von etwa 20 ml bis etwa 150 ml aufweist.

8. Kalorimeter gemäss einem der Ansprüche 6 oder 7, **dadurch gekennzeichnet, dass** der Reaktormantel (409) im Wesentlichen ein Materialblock mit einer hohen thermischen Leitfähigkeit ist, welcher eine Aussparung für den Reaktor (407) aufweist.

9. Kalorimeter gemäss einem der Ansprüche 6 oder 7, **dadurch gekennzeichnet, dass** der Reaktormantel (309) ein doppelwandiger Reaktormantel mit einer Aussparung für den Reaktor (307) ist, welcher mit einem Temperiermittel (210, 310) befüllt ist.

10. Kalorimeter gemäss einem der Ansprüche 6 oder 7, **dadurch gekennzeichnet, dass** der Reaktormantel (209) eine oder mehrere Heat Pipes (227) aufweist.

11. Kalorimeter gemäss einem der Ansprüche 6 bis 10, **dadurch gekennzeichnet, dass** der Reaktormantel (309) und der Reaktor (307) eine gemeinsame Einheit bilden.

12. Kalorimeter gemäss einem der Ansprüche 7 bis 11, **dadurch gekennzeichnet, dass** das Heizelement (202, 302, 402) zwischen dem Reaktormantel (209, 309, 409) und dem Kühlelement (204, 304, 404) angeordnet ist.

13. Kalorimeteranordnung mit mehreren Kalorimetern (526) gemäss einem der Ansprüche 7 bis 12, **dadurch gekennzeichnet, dass** diese einen gemeinsamen Thermostaten (500) gemäss einem der Ansprüche 1 bis 6 aufweisen.

## Claims

1. A thermostat (100, 500) for a calorimeter for controlling the temperature of a sample (101, 201, 301) with at least one heating element (102, 202, 302, 402) which directly or indirectly supplies heat to the sample (101, 201, 301), with a thermoelectric cooling element (103, 203, 303, 403), which during operation is thermally connected to a coolant (104, 204, 304, 404) and serves to pass heat from the sample (101, 201, 301) to the coolant (104, 204, 304, 404), with a control and/or regulating unit (105, 205, 305) for regulating and/or activating the thermostat (100, 500), which regulates the temperature of the sample (101, 201, 301) within the temperature range of the thermostat (100, 500), wherein the thermoelectric cooling element (103, 203, 303, 403) and the heating element (102, 202, 302, 402) are separate elements, and wherein the coolant (104, 204, 304, 404), both during heating and cooling of the sample (101, 201, 301) has an essentially constant cooling temperature, **characterised in that** in operation the thermostat (100, 500) either supplies heat to the sample (101, 201,301) via the heating element (102, 202, 302, 402) or withdraws heat from the same via the thermoelectric cooling element (103, 203, 303, 403), **in that** the control and/or regulating unit (105, 205, 305) regulates the thermostat (100, 500) such that the thermoelectric cooling element (103, 203, 303, 403) is passive and passes surplus heat directly to the coolant (104, 204, 304, 404), while the heating element (102, 202, 302, 402) heats the sample (101, 201, 301).

2. The thermostat according to claim 1, **characterised in that** the cooling element (103) comprises at least one Peltier element which is operated with a rectified voltage.

3. The thermostat according to one of claims 1 or 2, **characterised in that** the cooling element comprises a single one-stage Peltier element and that during operation the minimum temperature of the sample (101, 201, 301) is lower by approx. 50K and preferably by approx. 30K than the coolant temperature.

4. The thermostat according to one of claims 1 to 3, **characterised in that** the coolant temperature lies in the range of approx. +3 °C to approx. +15 °C, preferably in the range of approx. +3 °C to approx. +10 °C and in particular is approx. +5 °C, and **in that** the thermostat for controlling the temperature of the sample (101, 201, 301) is laid out for a temperature range of approx. -40 °C to approx. +200 °C and preferably of approx. -30 °C to approx. +180 °C.

5. The thermostat according to one of claims 1 to 4, **characterised in that** the thermostat cooperates with a thermo-analytical device for determining the thermogravimetric, calorimetric, rheological or thermos-mechanical properties of the sample.

6. A calorimeter with a thermostat according to one of claims 1 to 5, with at least one reactor (207, 307, 407) for receiving a sample (201, 301), with a reactor jacket (209, 309, 409) surrounding the reactor (207, 307, 407) and a stirrer (208, 308, 408) arranged in the reactor (207, 307, 407), **characterised in that** the cooling element (203, 303, 403) of the thermostat and the heating element (202, 302, 402) of the thermostat cooperate thermally with the sample (201, 301) and are regulated by means of the control and/or regulating unit (105, 205, 305), **characterised in that** the thermostat (100, 500) of the sample (101, 201, 301) either supplies heat to the sample (101, 201, 301) via the heating element (102, 202, 302, 402) or withdraws heat from the same via the thermoelectric cooling element (103, 203, 303, 403), **in that** the control and/or regulating unit (105, 205, 305) regulates the thermostat (100, 500) such that the thermoelectric cooling element (103, 203, 303, 403) is passive and passes surplus heat directly to the coolant (104, 204, 304, 404), while the heating element (102, 202, 302, 402) heats the sample (101, 201, 301), wherein the coolant (104, 204, 304, 404) both during heating and cooling of the sample (101, 201, 301) has an essentially constant coolant temperature.

7. The calorimeter according to claim 6, **characterised in that** the reactor (207, 307, 407) has a volume of approx. 5 ml to approx. 1000 ml, preferably of 5 ml to approx. 500 ml and in particular of approx. 20 ml to approx. 150 ml.

8. The calorimeter according to one of claims 6 or 7, **characterised in that** the reactor jacket (409) is essentially a material block with high thermal conductivity, which has a recess for the reactor (407).

9. The calorimeter according to one of claims 6 or 7, **characterised in that** the reactor jacket (309) is a double-walled reactor jacket with a recess for the reactor (307), which is filled with a temperature control means (210, 310).

10. The calorimeter according to one of claims 6 or 7, **characterised in that** the reactor jacket (209) has one or more heat pipes (227).

11. The calorimeter according to one of claims 6 to 10, **characterised in that** the reactor jacket (309) and the reactor (307) form a common unit.

12. The calorimeter according to one of claims 6 to 11, **characterised in that** the heating element (202, 302, 402) is arranged between the reactor jacket (209, 309, 409) and the cooling element (204, 304, 404).

13. A calorimeter array with a number of calorimeters (526) according to one of claims 7 to 12, **characterised in that** the calorimeters comprise a common thermostat (500) according to one of claims 1 to 6.

## Revendications

1. Thermostat (100, 500) pour un calorimètre permettant de réguler la température d'un échantillon (101, 201, 301) avec au moins un élément chauffant (102, 202, 302, 402) apportant de la chaleur directement ou indirectement à l'échantillon (101, 201, 301), avec un élément de refroidissement thermoélectrique (103, 203, 303, 403) thermiquement relié à un fluide de refroidissement (104, 204, 304, 404) pendant le fonctionnement et servant à la conduction de chaleur de l'échantillon (101, 201, 301) vers le fluide de refroidissement (104, 204, 304, 404), avec une unité de commande et/ou de régulation (105, 205, 305) pour la régulation et/ou l'actionnement du thermostat (100, 500), laquelle règle la température de l'échantillon (101, 201, 301) dans la plage de température du thermostat (100, 500), l'élément de refroidissement thermoélectrique (103, 203, 303, 403) et l'élément chauffant (102, 202, 302, 402) étant des éléments séparés, et le fluide de refroidissement (104, 204, 304, 404) présentant une température de fluide de refroidissement quasiment constante aussi bien lors du chauffage que lors du refroidissement, **caractérisé en ce que** pendant le fonctionnement, le thermostat (100, 500) apporte de la chaleur à l'échantillon (101, 201, 301) par le biais de l'élément chauffant (102, 202, 302, 402) ou ôte de la chaleur à celui-ci par le biais de l'élément de refroidissement thermoélectrique (103, 203, 303, 403), du fait que l'unité de commande et/ou de régulation (105, 205, 305) règle de thermostat (100, 500) de telle façon que l'élément de refroidissement thermoélectrique (103, 203, 303, 403) est passif et transfère de la chaleur excédentaire directement au fluide de refroidissement (104, 204, 304, 404), tandis que l'élément chauffant (102, 202, 302, 402) chauffe l'échantillon (101, 201, 301).

2. Thermostat selon la revendication 1, **caractérisé en ce que** l'élément de refroidissement (103) comporte au moins un élément Peltier fonctionnant avec une tension redressée.

3. Thermostat selon l'une des revendications 1 ou 2, **caractérisé en ce que** l'élément de refroidissement comporte un élément Peltier séparé à un seul niveau, et **en ce que** pendant le fonctionnement, la température minimale de l'échantillon (101, 201, 301) est inférieure d'environ 50K et de préférence d'environ 30K à la température du fluide de refroidissement.

4. Thermostat selon l'une des revendications 1 à 3, **caractérisé en ce que** la température du fluide de refroidissement varie entre environ +3°C et environ +15°C, de préférence entre +3°C et +10°C, et s'élève en particulier à environ +5°C, et **en ce que** le thermostat est conçu pour réguler la température d'un échantillon (101, 201, 301) dans une plage de température d'environ -40°C à environ +200°C, et de préférence d'environ -30°C à environ +180°C.

5. Thermostat selon l'une des revendications 1 à 4, **caractérisé en ce que** celui-ci coopère avec un dispositif thermoanalytique pour la détermination des propriétés thermogravimétriques, calorimétriques, rhéologiques ou thermomécaniques de l'échantillon.

6. Calorimètre comprenant un thermostat selon l'une des revendications 1 à 5, avec au moins un réacteur (207, 307, 407) destiné à recevoir un échantillon (201, 301), avec une enveloppe de réacteur (209, 309, 409) entourant le réacteur (207, 307, 407), et avec un agitateur (208, 308, 408) disposé dans le réacteur (207, 307, 407), **caractérisé en ce que** l'élément de refroidissement (203, 303, 403) du thermostat et l'élément chauffant (202, 302, 402) du thermostat coopèrent thermiquement avec l'échantillon (201, 301) tout en étant réglés au moyen de l'unité de commande et/ou de régulation (105, 205, 305), **caractérisé en ce que** le thermostat (100, 500) apporte de la chaleur à l'échantillon (101, 201, 301) par le biais de l'élément chauffant (102, 202, 302, 402) ou ôte de la chaleur à celui-ci par le biais de l'élément de refroidissement thermoélectrique (103, 203, 303, 403), du fait que l'unité de commande et/ou de régulation (105, 205, 305) règle de thermostat (100, 500) de telle façon que l'élément de refroidissement thermoélectrique (103, 203, 303, 403) est passif et transfère de la chaleur excédentaire directement au fluide de refroidissement (104, 204, 304, 404), tandis que l'élément chauffant (102, 202, 302, 402) chauffe l'échantillon (101, 201, 301), le fluide de refroidissement (104, 204, 304, 404) présentant une température de fluide de refroidissement quasiment constante aussi bien lors du chauffage que lors du refroidissement de l'échantillon (101, 201, 301).

7. Calorimètre selon la revendication 6, **caractérisé en ce que** le réacteur (207, 307, 407) présente un volume d'environ 5 ml à environ 1000 ml, de préférence de 5 ml à environ 500 ml et en particulier d'environ 20 ml à environ 150 ml.

8. Calorimètre selon l'une des revendications 6 ou 7, **caractérisé en ce que** l'enveloppe de réacteur (409) consiste essentiellement en un bloc de matériau avec une conductivité thermique élevée, lequel présente un évidement destiné au réacteur (407).

9. Calorimètre selon l'une des revendications 6 ou 7, **caractérisé en ce que** l'enveloppe de réacteur (309) consiste en une enveloppe de réacteur à double paroi, avec un évidement pour le réacteur (307), lequel est rempli d'un agent de régulation de température (210, 310).

10. Calorimètre selon l'une des revendications 6 ou 7, **caractérisé en ce que** l'enveloppe de réacteur (209) comporte une ou plusieurs caloducs (227).

11. Calorimètre selon l'une des revendications 6 à 10, **caractérisé en ce que** l'enveloppe de réacteur (309) et le réacteur (307) forment une unité commune.

12. Calorimètre selon l'une des revendications 7 à 11, **caractérisé en ce que** l'élément chauffant (202, 302, 402) est disposé entre l'enveloppe de réacteur (209, 309, 409) et l'élément de refroidissement (204, 304, 404).

13. Ensemble de calorimètres comprenant plusieurs calorimètres (526) selon l'une des revendications 7 à 12, **caractérisé en ce que** ceux-ci comportent un thermostat (500) commun selon l'une des revendications 1 à 6.
